(19) Europäisches Patentamt
European Patent Office
Office européen des brevets

(11) **EP 3 444 956 A1**

(12) **EUROPEAN PATENT APPLICATION**
published in accordance with Art. 153(4) EPC

(43) Date of publication:
**20.02.2019 Bulletin 2019/08**

(51) Int Cl.:
*H04B 7/04* (2017.01)    *H04J 11/00* (2006.01)

(21) Application number: **16898198.3**

(22) Date of filing: **12.04.2016**

(86) International application number:
**PCT/CN2016/079081**

(87) International publication number:
**WO 2017/177379 (19.10.2017 Gazette 2017/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Alcatel Lucent
91620 Nozay (FR)**

(72) Inventors:
• **SUN, Fanglei
Shanghai 201206 (CN)**
• **SUN, Huan
Shanghai 201206 (CN)**
• **YANG, Tao
Shanghai 201206 (CN)**

(74) Representative: **DREISS Patentanwälte PartG
mbB
Friedrichstraße 6
70174 Stuttgart (DE)**

(54) **METHOD AND DEVICE FOR TRANSMITTING PUBLIC CONTROL SIGNALS IN MILLIMETER WAVE COMMUNICATION SYSTEM**

(57)    Embodiments of the present disclosure relate to a method and a device for transmitting common control signals in a millimeter wave communication system. In one embodiment of the present disclosure, the method comprises: configuring a first beamforming codebook; precoding a plurality of common control signals respectively by using beamforming codewords in the first beamforming codebook, the plurality of common control signals being the same; sending, by using multiple beams, the plurality of precoded common control signals respectively to respective beam coverage regions in a cell in a space-division multiplexing manner. With embodiments of the present disclosure, beamformed transmission for synchronization/broadcasting/control signaling can fight against strong path loss in millimeter wave communication. Thereby, UEs accessing and precise update of system information later can be effectively guaranteed.

Fig. 1

**Description**

**FIELD**

Embodiments of the present disclosure relate to mobile communication technologies, and more particularly, to a method and a device for transmitting common control signals in a millimeter wave communication system.

**BACKGROUND**

A physical layer of fifth generation (5G) aims at providing high-performance of data rate, reduced cost and power consumption. In order to reach a data rate of gigabit-per-second for the next generation of mobile cellular communication standards, one option is to increase bandwidths available at millimeter wave frequencies. Working on millimeter wave frequencies, propagation quality of wireless channels are not good, including large path loss, absorptions of atmospheric and rain, low diffraction around obstacles and low penetration through objects.

To overcome these not good propagation qualities in a millimeter wave communication system, large arrays and narrow beams are of the key techniques for data transmission. However, transmission on common downlink (DL) control channel and broadcasting channel (e.g., PSS/SSS/PBCH/PDCCH (CSS)) for millimeter wave communication is mainly based on non-precoded transmission schemes or diversity schemes. While for thee millimeter wave communication, due to the above characteristics of millimeter wave channel, reusing the transmission scheme of LTE control channel may not meet the signal to interference plus noise ratio (SINR) and coverage requirement of the millimeter wave communication system.

Therefore, in embodiments of the present disclosure, beamformed transmissions of DL synchronization/broadcasting/control signaling will be considered . Since during a stage of synchronization or initial access, neither user equipment (UE)-specific beamforming information nor cell-specific reference signal (CRS) configuration is available for UEs, UE-specific beamforming transmission is impossible. Therefore, cell-specific beamformed transmission schemes based on predetermined codebooks are taken into consideration.

So far, there is no detailed discussion on beamformed transmission for common synchronization/PBCH/PDCCH. For the previously discussed beam scanning or grid of beam (GoB) used for UE-specific control channel, the main target is to perform beam selection with compulsive channel state information (CSI) feedback, and the CSI will be further used for precoding of UE-specific data/control channel. However, this concept cannot be used for transmission on DL common control channel.

**SUMMARY**

In view of the technical problems existing in the prior art, embodiments of the present disclosure provide a method and device for transmitting common control signals in a millimeter wave communication system.

According to a first aspect of the present disclosure, a method for transmitting common control signals in a base station of a millimeter wave communication system is proposed, the method comprising: configuring a first beamforming codebook; precoding a plurality of common control signals respectively by using beamforming codewords in the first beamforming codebook, the plurality of common control signals being the same; sending, by using a plurality of beams, the plurality of precoded common control signals respectively to respective beam coverage regions in a cell in a space-division multiplexing manner.

According to a second aspect of the present disclosure, proposed is a method of transmitting common control signals in a base station of a millimeter wave communication system, the method comprising: configuring a beamforming codebook; precoding a plurality of the common control signals respectively by using respective beamforming codewords in the beamforming codebook; and for each precoded common control signal, scanning an entirety of a cell with a single beam sequentially so as to transmit the precoded common control signal, wherein the single beam carries one precoded common control signal. According to a third aspect of the present disclosure, proposed is a method for transmitting common control signals in a base station of a millimeter wave communication system, the method comprising: configuring a beamforming codebook; precoding a plurality of common control signals respectively by using respective beamforming codewords in the beamforming codebook, the plurality of common control signals being the same; and scanning each region of a cell with a single beam simultaneously within the each region in a space-division multiplexing manner, an entirety of the each region being scanned with a different single beams respectively so as to transmit a plurality of precoded common control signals, wherein the single beam carries one precoded common control signal.

According to a fourth aspect of the present disclosure, proposed is a device for transmitting common control signals in a base station of a millimeter wave communication system, the device comprising: a configuring module for configuring a first beamforming codebook; a precoding module for precoding a plurality of common control signals respectively by using beamforming codewords in the first beamforming codebook, the plurality of common control signals being the same; and a sending module for sending, by using a plurality of beams, the plurality of precoded common control signals respectively to respective beam coverage regions in a cell in a space-division multiplexing manner. In addition, the precoding module is further configured to precode a reference signal sequence for the plurality of common control signals by using the beamforming codewords, respectively, so as to generate a plurality of different precoded reference signal sequences, the plurality of precoded reference signal sequences being carried by the plurality of beams, respectively.

The sending module is further configured to separately send the plurality of beams to the corresponding beam coverage regions in the cell in a space-division multiplexing manner.

In addition, the device further comprises a power boosting module, which increases a transmission power of the plurality of precoded common control signals by using at least one sub-carrier of at least one OFDM symbol for sending the plurality of precoded common control signals, wherein the at least one sub-carrier is avoided from being used for sending the plurality of precoded common control signals.

Preferably, the configuring module is further used for configuring at least one second beamforming codebook, the second beamforming codebook being different from the first beamforming codebook; precoding the plurality of same common control signals respectively by using beamforming codewords in the at least one second beamforming codebook; and sending, by using a plurality of beams, the plurality of common control signals that are precoded with the at least one second beamforming codebook respectively to the respective beam coverage regions in the cell in a space-division multiplexing manner, wherein the beam coverage regions, to which the common control signals precoded with the at least one second beamforming codebook are sent, have a beam shift relative to the beam coverage regions to which the common control signals precoded with the first beamforming codebook are sent.

Preferably, the sending module is further configured to send, by using the plurality of beams, the plurality of common control signals precoded with the first beamforming codebook and the plurality of common control signals precoded with the at least one second beamforming codebook in a predetermined order to the respective beam coverage regions in the cell in the space-division multiplexing manner.

Preferably, the sending module is further configured to send configuration information to user equipment, the configuration information comprising at least one of a codebook size of the first beamforming codebook and information on the beam shift.

According to a fifth aspect of the present disclosure, proposed is a device for transmitting common control signals in a base station of a millimeter wave communication system, the device comprising: a configuring module for configuring a beamforming codebook; a precoding module for precoding the common control signals by using respective beamforming codewords in the beamforming codebook; and a scanning module for, for each precoded common control signal, scanning an entirety of a cell with a single beam sequentially , so as to transmit the precoded common control signal, wherein the single beam carries one precoded common control signal. Preferably, the device further comprises a sending module for sending configuration information to user equipment, the configuration information comprising at least one of the following: a period of scanning the entirety of the cell with the single beam, a duration of transmitting the common control signals, and a codebook size of the beamforming codebook.

The precoding module is further configured to precode a reference signal sequence of the common control signals respectively by using respective beamforming codewords in the beamforming codebook, so as to generate a plurality of different precoded reference signal sequences.

The scanning module is further configured to, for each precoded reference signal sequence, scanning the entirety of the cell with a single beam sequentially, wherein the single beam carries one precoded reference signal sequence.

According to a sixth aspect of the present disclosure, proposed is a device for transmitting common control signals in a base station of a millimeter wave communication system, the device comprising: a configuring module for configuring a beamforming codebook; a precoding module for precoding a plurality of common control signals respectively by using respective beamforming codewords in the beamforming codebook, the plurality of common control signals being the same; and a scanning module for scanning each region of a cell with a single beam simultaneously within the each region in a space-division multiplexing manner, and an entirety of the each region being scanning with a different single beams respectively , so as to transmit a plurality of precoded common control signals, wherein the single beam carries one precoded common control signal.

Here, the configuring module is further configured to determine the beamforming codebook by means of a region codebook and a beam scanning codebook, wherein the region codebook comprises $N_{sector}$ codewords that indicate different regions in the cell respectively, and the beam scanning codebook comprises $N_{beam}$ codewords that indicate available beamforming codewords in one region.

Preferably, the configuring module is further configured to determine the beamforming codebook by obtaining a matrix Kronecker product of the region codebook and the beam scan codebook.

The precoding module is further configured to precode a reference signal sequence for the common control signals by using the beamforming codewords, respectively, so as to generate a plurality of different precoded reference signal sequences

The scanning module is further configured to in each region of a cell, to scan each region of a cell with a single beam simultaneously within the each region in a space-division multiplexing manner, an entirety of the each region being scanned with a different single beams respectively, so as to transmit the plurality of different precoded reference signal sequences, wherein the single beam carries one precoded reference signal sequence.

With embodiments of the present disclosure, beamformed transmission for synchronization/broadcasting/control signaling can fight against strong path loss in millimeter wave communication. Thereby, UEs accessing and later precise update of system information can be effectively guaranteed. Unlike the UE-specific control channel beam scanning as mentioned in the BACKGROUND, in embodiments of the present disclosure, for DL common synchronization/broadcasting/control signaling, the same signaling is transmitted on all beams simultaneously or scanned one by one, and no CSI feedback is needed. Therefore, the corresponding signal processing and the embedded reference signal sequence precoding and resource mapping should be different.

Various aspects of the present disclosure will become more apparent from the following illustration of specific embodiments.

## BRIEF DESCRIPTION OF THE DRAWINGS

Other features, objects and advantages of the present disclosure will become more apparent upon reading the detailed description of non-limiting embodiments, when taken in conjunction with the following accompanying drawings:

Fig. 1 shows a flowchart of a method 100 of transmitting common control signals according to one embodiment of the present disclosure;

Fig. 2 shows a schematic view of transmitting common control signals according to one embodiment of the present disclosure;

Fig. 3 shows a flowchart of a method 200 of transmitting common control signals according to another embodiment of the present disclosure;

Fig. 4 shows a schematic view of transmitting common control signals according to one embodiment of the present disclosure;

Fig. 5 shows a flowchart of a method 300 of transmitting common control signals according to a further embodiment of the present disclosure;

Fig. 6 shows a schematic view of transmitting common control signals according to a further embodiment of the present disclosure;

Fig. 7 shows a schematic view of a device for transmitting common control signals according to one embodiment of the present disclosure;

Fig. 8 shows a schematic view of a device for transmitting common control signals according to another embodiment of the present disclosure; and

Fig. 9 shows a schematic view of a device for transmitting common control signals according to a further embodiment of the present disclosure.

The same or similar reference numerals denote the same or corresponding parts or features throughout different figures.

## DETAILED DESCRIPTION OF EMBODIMENTS

In embodiments of the present disclosure, common control signals include, but not limited to, common DL synchronization/broadcasting/control signaling, and one or more narrow bands are assigned for common control signals, which is reasonable because limited signaling is included in these common channels.

Based on the scheme, besides using cell-specific beamforming to fight against the strong path loss for millimeter wave communication channels, power enhancement could be considered to further increase the strength of control signaling by borrowing power from other resource elements (REs)/sub-carriers on the same OFDM symbol in some embodiments of the present disclosure. These REs/sub-carriers are not used to transmit common control signals, which may be idle and/or though not idle, but have lower requirements on energy. Alternatively, these sub-carriers are used for data transmission, while data may be sent in other boosting manner, so some power may be allocated for transmission of control channels.

In time domain, transmission periods and resource allocation of different common control signals (e.g. synchronization signaling and master information block (MIB) are configurable and/or predetermined before UE accessing, which, for example, may be pre-configured at both eNB and UE side. For transmission of the common control signals, embodiments of the present disclosure propose the following three optional transmission schemes:

Scheme 1: Spatial multiplexing (SM) with a plurality of beams

Scheme 2: Beam searching

Scheme 3: A combination of beam searching and multiplexing

For each transmission scheme, the corresponding reference signal sequence of common control signals are embedded with the same beamforming weights (also known as beamforming codewords) for the transmission of common control signals. While the beams are used for transmitting common control signals for all UEs, thus no CSI is needed for common control signals. This is a key difference from beamformed UE-specific control signaling, where CSI feedback for a plurality of beams are needed to further select beams or adjust signaling beamforming in the beamformed UE-specific control signaling scheme. Thus, the reference signal sequence design and resource allocation will be different from that for the beamformed UE-specific control signaling or dedicated data. Specifically, in one embodiment of the present disclosure, before detection of broadcasting and control channel, information of reference signal sequence resource allocation for different cells should be known to UEs, e.g., could be implicitly indicated using cell identity (ID) to the UEs.

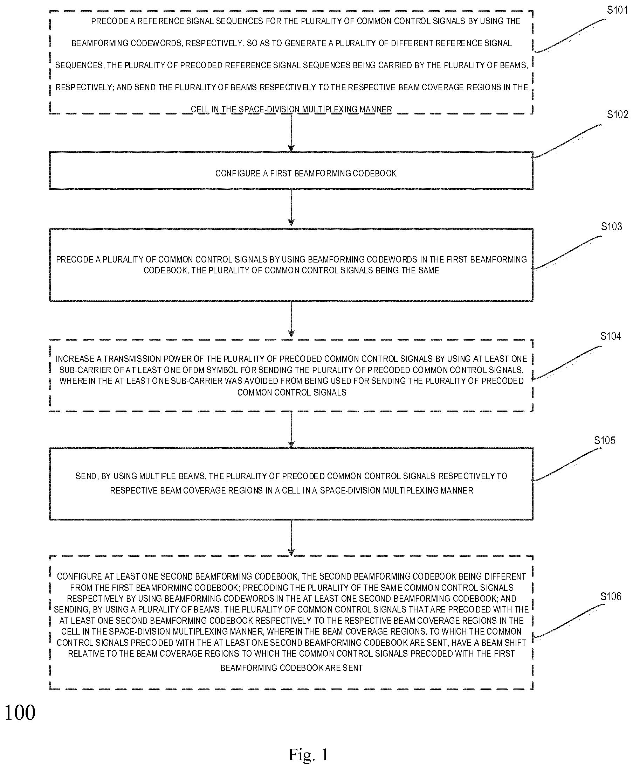

The above three schemes will be described in detail with reference to Figs. 1 to 6.

Scheme 1: Spatial multiplexing with a plurality of beams

Fig. 1 shows a flowchart of a method 100 of transmitting common control signals according to one embodiment of the present disclosure.

As shown in Fig. 1, at step S102, a base station is configured with a first beamforming codebook.

At step S103, the base station precodes a plurality of common control signals respectively by using beamforming codewords in the first beamforming codebook.

At step S105, the base station sends, by using a plurality of beams, the plurality of precoded common control signals respectively to respective beam coverage regions in a cell in a space-division multiplexing manner.

Optionally, before sending the plurality of common control signals, the method further comprises step S101: the base station precodes a reference signal sequence for the plurality of common control signals by using the beamforming codewords, respectively, so as to generate a plurality of different precoded reference signal sequences, the plurality of precoded reference signal sequences being carried by the plurality of beams, respectively. Next, the base station sends the plurality of beams respectively to the respective beam coverage regions in the cell in the space-division multiplexing manner. Thereby, the UE may leverage the received reference signal sequences for channel estimation and demodulation of subsequent common control signals.

Optionally, in one embodiment of the present disclosure, the method further comprises step S104: the base station increases a transmission power of the plurality of precoded common control signals by using at least one sub-carrier of at least one OFDM symbol for sending the plurality of precoded common control signals, wherein the at least one sub-carrier is avoided from being used for sending the plurality of precoded common control signals. As a result, the power for sending the common control signals may be increased, thus improving robustness of transmission.

In one embodiment of the present disclosure, the method further comprises step S106, in which the base station is configured with at least one second beamforming codebook that is different from the first beamforming codebook. Further, the base station precodes the plurality of the same common control signals respectively by using beamforming codewords in the at least one second beamforming codebook. Moreover, the base station sends, by using a plurality of beams, the plurality of common control signals that are precoded with the at least one second beamforming codebook respectively to the respective beam coverage regions in the cell in the space-division multiplexing manner, wherein the beam coverage regions, to which the common control signals precoded with the at least one second beamforming codebook are sent, have a beam shift relative to the beam coverage regions to which the common control signals precoded with the first beamforming codebook are sent.. In this embodiment, the base station may adjust a sending angle of the beams so as to cover UEs which are not covered previously.

In one embodiment of the present disclosure, the base station sends, by using the plurality of beams, the plurality of common control signals precoded with the first beamforming codebook and the plurality of common control signals precoded with the at least one second beamforming codebook in a predetermined order to the respective beam coverage regions in the cell in the space-division multiplexing manner. Here, the sending may be implemented cyclically or alternately, for example.

In one embodiment of the present disclosure, the method further comprises: the base station sends configuration information to user equipment, the configuration information comprising at least one of a codebook size of the first beamforming codebook, and information on the beam shift. Note that this step is not essential.

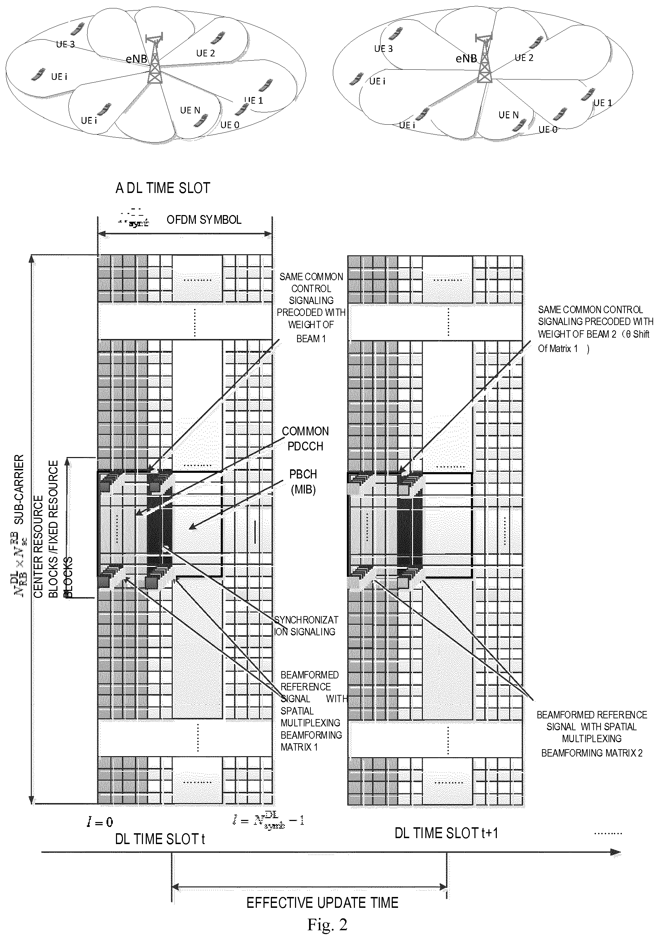

Each of the above steps will be further described with reference to Fig. 2.

In this scheme, the same common control signal (synchronization/broadcasting/control signaling) precoded with different beamforming codewords (also referred to as beamforming weights) is transmitted on a plurality of beams in a spatial multiplex mode, so that UEs covered by different regions/sectors could receive the same signal common control signal at the same time. In the scheme, the content of the common control signals transmitted with different beams is the same, whereas beamforming weights for various common control signals are different so that precoded common control signals will form spatial multiplexing.

In addition, in this scheme, transmission power should be assigned on different beams. Here, the number of beams supported with the power constraint can be estimated to meet the minimum receiving SINR at cell edge.

In one embodiment of the present disclosure, in the resource blocks carrying the common control signals, reference signal sequences of the common control signals are precoded with the same spatial multiplexing beam vectors as beam vectors (also referred to as beamforming weights/codewords) for the common control signals and embedded in the resource blocks being sent so as to perform channel estimations and demodulation. As such, the same reference signal sequence weighted with different codewords will form difference reference signal sequences on a plurality of beams.

For this scheme, since no CSI feedback is needed, precoding and mapping of the reference signal sequence is totally different from beamformed transmissions used for UE-specific control signaling or dedicated data, where one beamformed port should be mapped on a set of specific resource elements without sharing. However, for the reference signal sequences used for the common synchronization/broadcasting/control in the present disclosure, beamformed reference signal sequences of a plurality of beams should be multiplexed on the same resource elements for further decoding, as shown in Fig. 2. This arrangement will significantly decrease the overhead of transmission of reference signal sequence.

In addition, in one embodiment of the present disclosure, during transmissions among different beams, an issue of insufficient coverage may occur on regions between neighboring beams. In order to solve this issue, solutions are proposed as following:

- Power boosting is utilized to further increase the strength of control signaling by borrowing power from other resource elements on the same OFDM symbol.

- A beam shift scheme is utilized to solve a coverage hole issue. Fig. 2 shows Scheme 1 with 2 kinds of beam shifting. At time slot t, UE 0 is located on a coverage hole between two neighboring beams. At time slot t+1, all beams formed in time slot t are shifted with an angle $\theta$, e.g., $\theta = 360/N/2 = 360/8/2 = 22.5°$, where N is the number of beams. As such, UE 0 can be covered and receive the common synchronization/broadcasting/control signals.

In one embodiment of the present disclosure, various beam shift schemes can be utilized. For example, beams may be shifted with $\theta 1, \theta 2 ... \theta n$ relative to original ones. In this case, the above plurality of different beams may be transmitted in a predetermined order, e.g., transmitting cyclically. That is, at time slot t, an initial beam is sent; at time slot t+1, a beam shifted with $\theta 1$ is sent ... at time slot t+n, a beam shifted with $\theta n$ is sent. At the end, it is returned to send the initial beam. Of course, other flexible sending manner may also be utilized, for example, the above plurality of shifted beams is sent alternately.

In this scheme, UEs is transparent to a selection of codebook and no CSI feedback is needed. In one embodiment of the present disclosure, eNB may inform a UE of time/period regarding when to detect beamformed common control signals, the codebook size and/or information on beam shift (e.g., a specific pattern of beam shift, in which order to send, etc.) by appropriate means (explicitly/implicitly). Note the above information is not essential but is only sent when necessary.

In case a UE is located on an overlapped region covered by two beams, diversity gain can be achieved by receiving signals from the two beams simultaneously.

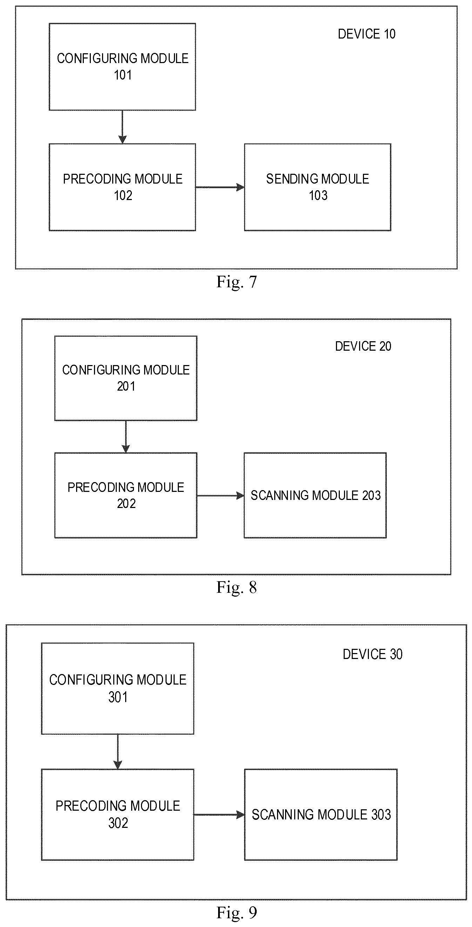

A specific implementation procedure of the above scheme will be presented with reference to Fig. 2. As shown in Fig. 2, 8 beams are utilized to transmit common control signals in the example of Fig. 2. Here, the common control signals will be precoded with a beamforming codebook comprising 8 beamforming codewords/weights and will be transmitted in a space-division multiplexing manner. As shown in Fig. 2, 8 data streams overlap on a corresponding time-frequency resource for transmission. In one embodiment of the present disclosure, 8 beamforming codewords/weights can be presented in a form of spatial multiplexing beamforming matrix.

For the sake of illustration, one embodiment of the present disclosure will be illustrated by means of Equation 1. However, it is to be understood the following equation does not limit the scope of the present disclosure but is only a codebook design criterion. Those skilled in the art should understand that other codebook design criterion may also be adopted.

As shown by the Equation 1, y1 ... y8 are common control signals carried by various beams and received by a UE. S1 ... S8 are common control signals with the same content. H is a channel matrix.

$$\begin{bmatrix} y_1 \\ y_2 \\ \dots \\ y_8 \end{bmatrix} = H*W* \begin{bmatrix} s_1 \\ s_2 \\ \dots \\ s_8 \end{bmatrix} \qquad \text{Equation 1}$$

In one embodiment of the present disclosure, beamforming codewords/weights $w_1$ ... wg in the beamforming matrix (precoding matrix) W may be selected such that $h_i w_i$ in Equation 1 does not equal 0 and $h_i w_i = 0$ or approximates to zero, i.e. spatial multiplexing. Therefore, 8 beams as shown in Fig. 2 will be generated, which point to and cover different regions (or referred to as sectors). Thereby, different regions contain common control signals that have the same content but are precoded in different manners. For example, beam 1 may be represented as $h_1 w_1 s_1$, and beam 2 may be represented as $h_2 w_2 s_2$.

Further, before sending the above beams carrying common control signals, beams carrying reference signal sequences of the common control signals may be sent with the same beamforming codewords/weights $w_1$ ... $w_8$. That is, the reference signal sequence is subject to the same precoding manner as the common control signals. Thereby, the UE may perform channel estimation and demodulation to common control signals that are sent subsequently.

In addition, the above reference signal sequence may be embedded in a region of physical resource blocks for transmitting various common control signals, and spatially multiplexed on the same resource element so as to further save resource overhead.

As described above, when the UE falls within the coverage hole between two neighboring beams, a beam shift method may be utilized to solve this issue. For example, all previous beams may be shifted with an angle θ by adjusting the beamforming codewords/weights $w_1$ ... wg. Optionally, this may also be implemented by configuring another beamforming codebook (i.e., using another spatial multiplexing beamforming matrix). After all beams are shifted with the angle θ, UE0 can be covered, and common synchronization/broadcasting/control signals can be saved.

According to one embodiment of the present disclosure, angles of the beams may vary alternately or cyclically in terms of time. That is, the base station may alternately or cyclically send common control signals which are precoded via the first spatial multiplexing beamforming matrix and the second spatial multiplexing beamforming matrix. Here, while description is presented by taking only two spatial multiplexing beamforming matrices, it should be understood that the above ideal may be expanded to more spatial multiplexing beamforming matrices.

Scheme 2: Beam searching scheme

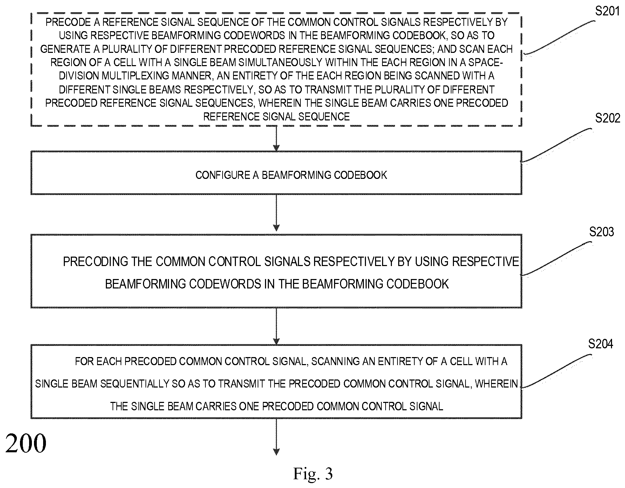

Fig. 3 shows a flowchart of a method 200 of transmitting common control signals according to another embodiment of the present disclosure.

As shown in Fig. 3, at step S202, the base station is configured with a beamforming codebook.

At step S203, the base station precodes the common control signals respectively by using respective beamforming codewords in the beamforming codebook.

Next, at step S204, for each precoded common control signal, the base station scans scanning an entirety of a cell with a single beam sequentially so as to transmit the precoded common control signal, wherein the single beam carries one precoded common control signal.

Optionally, before sending the common control signals, the method further comprises S201: the base station precodes reference signal sequences of the common control signals separately by using respective beamforming codewords in the beamforming codebook, so as to generate multiple different precoded reference signal sequences. Moreover, for each precoded reference signal sequence, the base station scans a single beam over a whole cell one by one, wherein the single beam carries one precoded reference signal sequence. Thereby, the UE may utilize received reference signal sequences to perform channel estimation and demodulation to subsequent common control signals.

In one embodiment of the present disclosure, the method further comprises: the base station sends configuration information to user equipment, the configuration information comprising at least one of the following: a period of scanning the entirety of the cell with the single beam, a duration of transmitting the common control signals, and a codebook size of the beamforming codebook. Note the above configuration information is not necessarily sent.

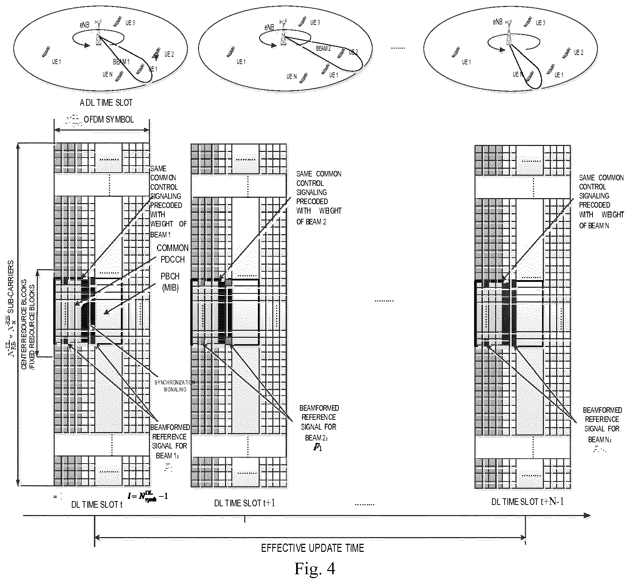

The above steps will be illustrated in detail in conjunction with Fig. 4.

In this scheme, beams are scanned at a base station (eNB) side with the same common control signals over a whole cell. In addition, reference signal sequences of the common control signals are precoded with the same beamforming vectors as precoding the common control signals, and are embedded in resource blocks.

In this scheme, for a single UE, only a signal received on its pointed beam is the strongest and signals received on the other beams is so weak that the signals cannot be decoded successfully.

Therefore, in one embodiment of the present disclosure, the time used to finish beam scanning over the whole cell is denoted as an effective update period, i.e., N time slots, where N is the number of beams. For example, one beam is scanned over the whole cell on one time slot. Optionally, one kind of common control signals is scanned in one effective update period, and another kind of common control signals is scanned in a next effective update period.

Optionally, the scheme may further be implemented with other robustness scheme, such as high redundancy, lower modulation and coding scheme (MCS). As such, burden of time caused by beam searching with a small number of beams can be alleviated.

Fig. 4 shows a schematic view of Scheme 2. A center narrow band resource region is assigned for beamformed common control signals (synchronization/broadcasting/control signaling). During a period of N time slots, common control signals with the same content are precoded by different beamforming weights of beam 1 to beam N, so as to generate N precoded common control signals. Then, the N precoded common control signals are transmitted on different time slots 1 to N. That is, in this scheme, common control signals with the same content that have been precoded with different beamforming weights are scanned one by one.

As the beamforming weights are predetermined as a codebook at the eNB side to cover a whole cell with beam scanning, after an effective update period (N time slots), a UE in the cell can receive beamformed common control signals of a strong strength at the most pointed beam.

In one embodiment of the present disclosure, to determine the beamforming vectors, for example, when being used in a LTE/LTE-A codebook design, a discrete fourier transform (DFT) based codebook $W=w=[w_1, w_2, ..., w_n]_{N_{Tx} \times N}$ can be considered, where $N_{Tx}$ is the number of transmit antennas and N is the number of beams/antenna ports. It should be noted that the codebook in the scope of the disclosure may follow any appropriate LTE/LTE-A codebook, and the above example does not exclude other codebooks.

For common control signals, a selection of codebook is basically transparent to UEs and no CSI feedback is needed.

During an effective update period, the same common control signal is transmitted on different beams and on different time slots. UEs will try to receive common control signals on each time slot during the effective update period and perform respective procedure after a successful receiving on a certain beam (e.g., higher than a predetermined SINR threshold on it). In this procedure, the UE does not need to know the details of the beams.

In one embodiment of the present disclosure, the base station may further send configuration information to the UE, the configuration information comprising: a period of scanning a single beam over a whole cell, a duration (i.e., the above mentioned effective update period) of transmitting common control signals, and/or a codebook size. As such, the UE may detect required common control signals according to the configuration information. Similarly, it should be understood the above configuration information is not essential but is only sent when necessary.

In one embodiment of the present disclosure, like Scheme 1, before scanning the above beams carrying common control signals over the cell, reference a signal sequence may be weighted with the same beamforming codewords/weights as beamforming codewords/weights for common control signals, so that a single beam is scanned over the whole cell one by one. Here, each single beam carries one precoded reference signal sequence. That is, reference signal sequences are subject to the same precoding manner as common control signals. Thereby, the UE may perform a channel estimation and a demodulation to common control signals that are sent subsequently.

Compared with Scheme 1, the transmission delay in Scheme 2 is longer without power sharing for all beams. To this end, in order to further solve the coverage hole issue between two beams, the power boosting and beam shifting in Scheme 1 can also be considered. For the beam shifting, the above mentioned beamforming codewords can be adjusted, so that the beams can be scanned with a narrower angle interval to cover all cell regions. The adjustment on width of beams may be achieved by adjusting antenna configurations and a selection of codebook.

Scheme 3: A combination of beam searching and multiplexing.

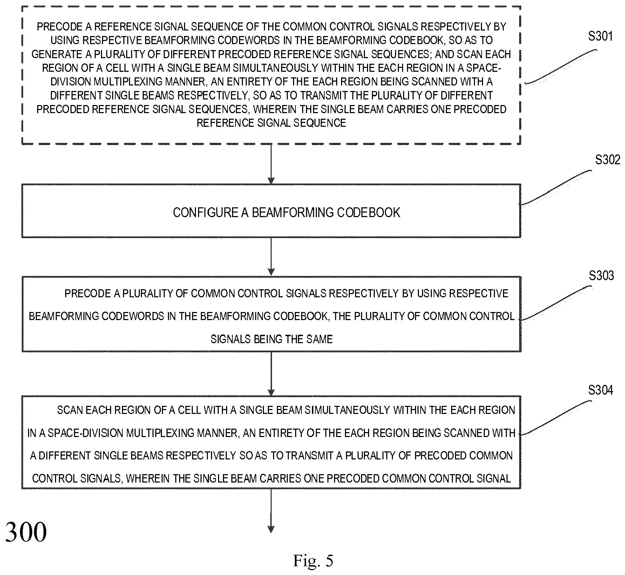

Fig. 5 shows a flowchart of a method 300 of transmitting common control signals according to a further embodiment of the present disclosure.

As shown in Fig. 5, at step S302, a base station is configured with a beamforming codebook.

At step S303, the base station precodes a plurality of common control signals respectively by using respective beamforming codewords in the beamforming codebook, the plurality of common control signals being the same. Next, at step S304, in each region of a cell, the base station scans each region of a cell with a single beam simultaneously within the each region in a space-division multiplexing manner, an entirety of the each region being scanned with a different single beams respectively so as to transmit a plurality of precoded common control signals, wherein the single beam carries one precoded common control signal.,

In one embodiment of the present disclosure, before sending the common control signals, the method further comprises S301, in which the base station precodes a reference signal sequence for the common control signals by using the beamforming codewords, respectively, so as to generate a plurality of different precoded reference signal sequences. Subsequently, for each precoded reference signal sequence, the base station scans an entirety of a cell with a single beam sequentially wherein the single beam carries one precoded reference signal sequence. Thereby, the UE may utilize the received reference signal sequence to perform channel estimation and demodulation to subsequent common control signals. In one embodiment of the present disclosure, configuring a beamforming codebook further comprises: determining the beamforming codebook by means of a region codebook and a beam scan codebook, wherein the region codebook comprises $N_{sector}$ codewords each indicating different regions in the cell respectively, and the beam scan codebook comprises $N_{beam}$ codewords indicating available beamforming codewords in one region.

Optionally, the base station may determine the beamforming codebook by computing a matrix Kronecker product of the region codebook and the beam scanning codebook.

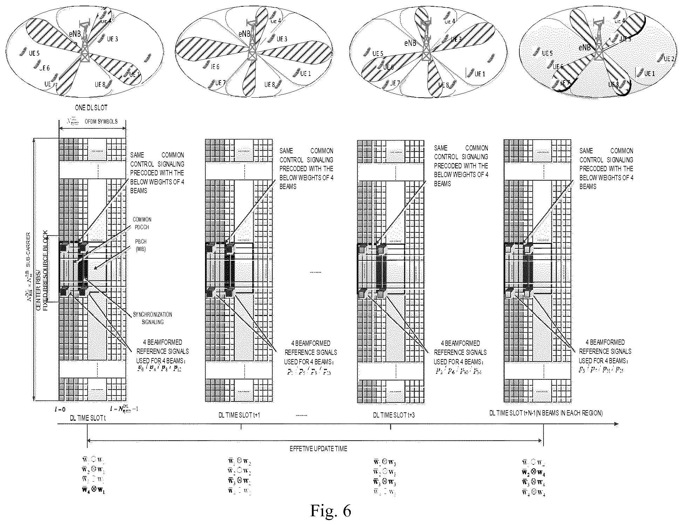

Each of the above steps will be further illustrated in conjunction with Fig. 6.

The whole cell is divided into different regions/sectors by spatial multiplexing manner in the transmission procedure, and beam searching similar to the one in Scheme 2 is further performed in each sector. For all sectors, beam searching within sectors can be performed simultaneously. The scheme can make a tradeoff between search time and power allocation. Similarly, the reference signal sequence is precoded via the same beamforming vector as the common control signals.

As shown in Fig. 6, an example with N=16 beams is given, where first the cell is divided into 4 sectors and 4 beams are simultaneously scanned over 4 sectors. Next, in each sector, 4 beams are scanned one by one. The 16 beams carry the same common control signals, whereas these common control signals are precoded with different beamforming vectors so as to form the above transmission manner.

Here each scan mentioned before is performed simultaneously. From the eNB point of view in a time slot, 4 beams with the same common control signals are scanned simultaneously in a time slot. Here, 4 data streams overlap on the corresponding time-frequency resource for transmission.

Scheme 3 is a balanced scheme which can alleviate the power consumption compared with Scheme 1 and increase the time efficiency compared with Scheme 2. In one embodiment of the present disclosure, to shorten the search time, the beam scanning pattern can be optimized by a search sequence, e.g., binary search.

In one embodiment of the present disclosure, the beamforming codebook comprises a region/sector codebook and a beam scanning codebook.

In the following example, the sector codebook is denoted as $\overline{W}_{sector} = [\overline{W}_1, \overline{W}_2, ..., \overline{w}_{Nsector}]$, the region codebook comprising $N_{sector}$ codewords that indicate different regions/sectors in the cell respectively. The beam scanning codebook is denoted as $W_{Scan} = [w_1, w_2, ..., w_{Nbeam}]$, which indicates available beamforming codewords in one region.

The beamforming codebook may be determined by means of the above two codebooks. Optionally, in one embodiment of the present disclosure, the beamforming codebook is determined by a cross product of the above two codebooks. Of course, other appropriate manner may also be adopted.

Illustration is presented below to an embodiment that a matrix Kronecker product of the region codebook and the beam scanning codebook is calculated.

Subsequently, at a DL time slot, the same common control signals are sent in a spatial multiplexing manner with precoders (that is beamforming codebooks, W matrix in Equation 1) of $\{[\overline{w}_j \otimes w_i]_{NTx \times 1}, j=1, ..., N_{sector}\}$, i = 1, ..., $N_{Beam}$. Here, the above "$h_i w_i$ does not equal zero and $h_i w_j=0$" is applied.

In one embodiment of the present disclosure, the sector and beam scanning sequence can be separated and combined flexibly, which will speed up signaling transmission. The detailed scan manner/configuration can be ignored for UEs because UEs only concern the pointed beam scanning transmission and obtain the best receiving quality. For the reference signal sequence, at one time slot, four beams may also be transmitted in spatial multiplexing manner. Specifically, the reference signal sequence may be precoded via the same beam weights as those used for the common control signals and sent in the same spatial multiplexing manner. Thereby, UEs may perform channel estimation and demodulation to common control signals that are sent subsequently.

Similarly, Scheme 3 may also utilize the power boosting and beam shifting in Scheme 1.

Although the codebook design in Scheme 3 is different from the above two schemes, as described in the above schemes, UEs can still be transparent to the selection of codebook and no CSI feedback is needed. Optionally, eNB may send configuration information to the UE, the configuration information comprises: a period of scanning the single beam over a whole cell, and/or a duration (i.e., the above mentioned effective update period) of transmitting the common control signals. As such, the UE may detect the required common control signals according to the configuration information.

Fig. 7 shows a schematic view of a device 10 for transmitting common control signals according to one embodiment of the present disclosure. The device 10 comprises: a configuring module 101, a precoding module 102 and a sending module 103.

The configuring module 101 is used for configuring a first beamforming codebook.

The precoding module 102 is used for precoding a plurality of common control signals respectively by using beamforming codewords in the first beamforming codebook, the plurality of common control signals being the same. The sending module 103 is used for sending, by using a plurality of beams, the plurality of precoded common control signals respectively to respective beam coverage regions in a cell in a space-division multiplexing manner. In addition, the precoding module 102 is further configured to precode a reference signal sequence for the common control signals by using the beamforming codewords, respectively, so as to generate a plurality of different reference signal sequences carrying the a plurality of beams respectively.

The sending module 103 is further configured to respectively send the plurality of beams to the corresponding beam coverage regions in the cell in a space-division multiplexing manner.

In addition, the device 10 further comprises a power boosting module, which increases increasing a transmission power of the plurality of precoded common control signals by using at least one sub-carrier of at least one OFDM symbol for sending the plurality of precoded common control signals, where the at least one sub-carrier was avoided from being used for sending the plurality of precoded common control signals.

Preferably, the configuring module 101 is further used for configuring at least one second beamforming codebook, the second beamforming codebook being different from the first beamforming codebook; precoding the plurality of the same common control signals respectively by using beamforming codewords in the at least one second beamforming codebook; and sending, by using a plurality of beams, the plurality of common control signals that are precoded with the at least one second beamforming codebook respectively to the respective beam coverage regions in the cell in the space-division multiplexing manner, where the beam coverage regions, to which the common control signals precoded with the at least one second beamforming codebook are sent, have a beam shift relative to the beam coverage regions to which the common control signals precoded with the first beamforming codebook are sent.

Preferably, the sending module 103 is further configured to send, by using the plurality of beams, the plurality of common control signals precoded with the first beamforming codebook and the plurality of common control signals precoded with the at least one second beamforming codebook in a predetermined order to the respective beam coverage regions in the cell in the space-division multiplexing manner.

Preferably, the sending module 103 is further configured to send configuration information to user equipment, the configuration information comprises at least one of: a codebook size of the first beamforming codebook and information on the beam shift.

Fig. 8 shows a schematic view of a device for transmitting common control signals according to another embodiment of the present disclosure. The device 20 comprises: a configuring module 201, a precoding module 202 and a scanning module 203.

The configuring module 201 is used for configuring a beamforming codebook.

The precoding module 202 is used for separately precoding the common control signals by using respective beamforming codewords in the beamforming codebook.

The scanning module 203 is used for, for each precoded common control signal, scanning an entirety of a cell with a single beam sequentially, so as to transmit the precoded common control signal, wherein the single beam carries one precoded common control signal.

Preferably, the device 20 further comprises a sending module for sending configuration information to user equipment, the configuration information comprises: at least one of the a period of scanning the entirety of the cell with the single beam, a duration of transmitting the common control signals, and a codebook size of the beamforming codebook.

The precoding module 202 is further configured to precode a reference signal sequence of the common control signals respectively by using respective beamforming codewords in the beamforming codebook, so as to generate a plurality of different precoded reference signal sequences.

The scanning module 203 is further configured to, for each precoded reference signal sequence, scan an entirety of a cell with a single beam sequentially, wherein the single beam carries one precoded reference signal sequence.

Fig. 9 shows a schematic view of a device for transmitting common control signals according to a further embodiment of the present disclosure. The device 30 comprises: a configuring module 301, a precoding module 302 and a scanning module 303.

The configuring module 301 is used for configuring a beamforming codebook.

The precoding module 302 is used for precoding a plurality of common control signals respectively by using respective beamforming codewords in the beamforming codebook, the plurality of common control signals being the same. The scanning module 303 is used for scanning each region of a cell with a single beam simultaneously within the each region in a space-division multiplexing manner, and an entirety of the each region being scanning with a different single beams respectively, so as to transmit a plurality of precoded common control signals, wherein the single beam carries one precoded common control signal. Here, the configuring module 301 is further configured to determine the beamforming codebook by means of a region codebook and a beam scanning codebook, wherein the region codebook comprises $N_{sector}$ codewords that indicate different regions in the cell respectively, and the beam scanning codebook comprises $N_{beam}$ codewords that indicate available beamforming codewords in one region.

Preferably, the configuring module 301 is further configured to determine the beamforming codebook by a cross product of the region codebook and the beam scanning codebook.

The precoding module 302 is further configured to precode reference signal sequences for the common control signals by using the beamforming codewords, respectively, so as to generate a plurality of different precoded reference signal sequences.

The scanning module 303 is further configured to scan each region of a cell with a single beam simultaneously within the each region in a space-division multiplexing manner, an entirety of the each region being scanned with a different single beams respectively, so as to transmit the plurality of different precoded reference signal sequences, wherein the single beam carries one precoded reference signal sequence.

It is obvious to those skilled in the art that the present disclosure is not limited to details of the above example embodiments and may be implemented in other specific manner without departing from the spirit or basic features of the present disclosure. Therefore, the embodiments should be construed as exemplary with no limitation. In addition, obviously, the term "comprise" does not exclude other element and step, and the term "one" does not exclude a plurality. A plurality of elements defined in a device claim may also be implemented by one element. The terms "first," "second" and the like only indicate names but do not indicate any specific order.

**Claims**

1. A method of transmitting common control signals in a base station of a millimeter wave communication system, the method comprising:

    configuring a first beamforming codebook;
    precoding a plurality of common control signals respectively by using beamforming codewords in the first beamforming codebook, the plurality of common control signals being the same; and
    sending, by using a plurality of beams, the plurality of precoded common control signals respectively to respective beam coverage regions in a cell in a space-division multiplexing manner.

2. The method according to claim 1, further comprising:

    precoding a reference signal sequence for the plurality of common control signals by using the beamforming codewords, respectively, so as to generate a plurality of different precoded reference signal sequences, the plurality of precoded reference signal sequences being carried by the plurality of beams, respectively; and
    sending the plurality of beams respectively to the respective beam coverage regions in the cell in the space-division multiplexing manner.

3. The method according to claim 1 or 2, further comprising:

    increasing a transmission power of the plurality of precoded common control signals by using at least one sub-carrier of at least one OFDM symbol for sending the plurality of precoded common control signals, wherein the at least one sub-carrier was avoided from being used for sending the plurality of precoded common control signals.

4. The method according to claim 1 or 2, further comprising:

    configuring at least one second beamforming codebook, the second beamforming codebook being different from the first beamforming codebook;
    precoding the plurality of the same common control signals respectively by using beamforming codewords in the at least one second beamforming codebook; and

sending, by using a plurality of beams, the plurality of common control signals that are precoded with the at least one second beamforming codebook respectively to the respective beam coverage regions in the cell in the space-division multiplexing manner, wherein the beam coverage regions, to which the common control signals precoded with the at least one second beamforming codebook are sent, have a beam shift relative to the beam coverage regions to which the common control signals precoded with the first beamforming codebook are sent.

5. The method according to claim 4, further comprising:

sending, by using the plurality of beams, the plurality of common control signals precoded with the first beamforming codebook and the plurality of common control signals precoded with the at least one second beamforming codebook in a predetermined order to the respective beam coverage regions in the cell in the space-division multiplexing manner.

6. The method according to claim 4 or 5, further comprising:

sending configuration information to user equipment, the configuration information comprising at least one of:

a codebook size of the first beamforming codebook, and
information on the beam shift.

7. The method according to claim 1, wherein the common control signals at least comprise at least one of:

synchronization signaling;
broadcasting signaling; and
common control signaling.

8. A method of transmitting common control signals in a base station of a millimeter wave communication system, the method comprising:

configuring a beamforming codebook;
precoding a plurality of the common control signals respectively by using respective beamforming codewords in the beamforming codebook; and
for each precoded common control signal, scanning an entirety of a cell with a single beam sequentially so as to transmit the precoded common control signal, wherein the single beam carries one precoded common control signal.

9. The method according to claim 8, further comprising:

sending configuration information to user equipment, the configuration information comprising at least one of the following: a period of scanning the entirety of the cell with the single beam, a duration of transmitting the common control signals, and a codebook size of the beamforming codebook.

10. The method according to claim 7 or 8, further comprising:

precoding a reference signal sequence of the common control signals respectively by using respective beamforming codewords in the beamforming codebook, so as to generate a plurality of different precoded reference signal sequences; and
for each precoded reference signal sequence, scanning the entirety of the cell with a single beam sequentially, wherein the single beam carries one precoded reference signal sequence.

11. The method according to claim 8, wherein the common control signals at least comprise at least one of:

synchronization signaling;
broadcasting signaling; and
common control signaling.

**12.** A method of transmitting common control signals in a base station of a millimeter wave communication system, the method comprising:

configuring a beamforming codebook;
precoding a plurality of common control signals respectively by using respective beamforming codewords in the beamforming codebook, the plurality of common control signals being the same; and
scanning each region of a cell with a single beam simultaneously within the each region in a space-division multiplexing manner, an entirety of the each region being scanned with a different single beams respectively so as to transmit a plurality of precoded common control signals, wherein the single beam carries one precoded common control signal.

**13.** The method according to claim 12, wherein configuring the beamforming codebook further comprises:

determining the beamforming codebook by means of a region codebook and a beam scan codebook, wherein the region codebook comprises $N_{sector}$ codewords each indicating different regions in the cell respectively, and the beam scan codebook comprises $N_{beam}$ codewords indicating available beamforming codewords in one region.

**14.** The method according to claim 13, further comprising:

determining the beamforming codebook by obtaining a matrix Kronecker product of the region codebook and the beam scan codebook.

**15.** The method according to any of claims 12 to 14, further comprising:

precoding a reference signal sequence for the common control signals by using the beamforming codewords, respectively, so as to generate a plurality of different precoded reference signal sequences; and
scanning each region of a cell with a single beam simultaneously within the each region in a space-division multiplexing manner, an entirety of the each region being scanned with a different single beams respectively, so as to transmit the plurality of different precoded reference signal sequences, wherein the single beam carries one precoded reference signal sequence.

**16.** The method according to claim 12, wherein the common control signals at least comprise at least one of:

synchronization signaling;
broadcasting signaling; and
common control signaling.

**17.** A device for transmitting common control signals in a base station of a millimeter wave communication system, the device comprising:

a configuring module for configuring a first beamforming codebook;
a precoding module for precoding a plurality of common control signals respectively by using beamforming codewords in the first beamforming codebook, the plurality of common control signals being the same; and
a sending module for sending, by using a plurality of beams, the plurality of precoded common control signals respectively to respective beam coverage regions in a cell in a space-division multiplexing manner.

**18.** A device for transmitting common control signals in a base station of a millimeter wave communication system, the device comprising:

a configuring module for configuring a beamforming codebook;
a precoding module for precoding the common control signals by using respective beamforming codewords in the beamforming codebook; and
a scanning module for, for each precoded common control signal, scanning an entirety of a cell with a single beam sequentially , so as to transmit the precoded common control signal, wherein the single beam carries one precoded common control signal.

**19.** A device for transmitting common control signals in a base station of a millimeter wave communication system, the device comprising:

a configuring module for configuring a beamforming codebook;
a precoding module for precoding a plurality of common control signals respectively by using respective beamforming codewords in the beamforming codebook, the plurality of common control signals being the same; and
a scanning module for scanning each region of a cell with a single beam simultaneously within the each region in a space-division multiplexing manner, and an entirety of the each region being scanning with a different single beams respectively , so as to transmit a plurality of precoded common control signals, wherein the single beam carries one precoded common control signal.

PRECODE A REFERENCE SIGNAL SEQUENCES FOR THE PLURALITY OF COMMON CONTROL SIGNALS BY USING THE BEAMFORMING CODEWORDS, RESPECTIVELY, SO AS TO GENERATE A PLURALITY OF DIFFERENT REFERENCE SIGNAL SEQUENCES, THE PLURALITY OF PRECODED REFERENCE SIGNAL SEQUENCES BEING CARRIED BY THE PLURALITY OF BEAMS, RESPECTIVELY; AND SEND THE PLURALITY OF BEAMS RESPECTIVELY TO THE RESPECTIVE BEAM COVERAGE REGIONS IN THE CELL IN THE SPACE-DIVISION MULTIPLEXING MANNER

S101

CONFIGURE A FIRST BEAMFORMING CODEBOOK

S102

PRECODE A PLURALITY OF COMMON CONTROL SIGNALS BY USING BEAMFORMING CODEWORDS IN THE FIRST BEAMFORMING CODEBOOK, THE PLURALITY OF COMMON CONTROL SIGNALS BEING THE SAME

S103

INCREASE A TRANSMISSION POWER OF THE PLURALITY OF PRECODED COMMON CONTROL SIGNALS BY USING AT LEAST ONE SUB-CARRIER OF AT LEAST ONE OFDM SYMBOL FOR SENDING THE PLURALITY OF PRECODED COMMON CONTROL SIGNALS, WHEREIN THE AT LEAST ONE SUB-CARRIER WAS AVOIDED FROM BEING USED FOR SENDING THE PLURALITY OF PRECODED COMMON CONTROL SIGNALS

S104

SEND, BY USING MULTIPLE BEAMS, THE PLURALITY OF PRECODED COMMON CONTROL SIGNALS RESPECTIVELY TO RESPECTIVE BEAM COVERAGE REGIONS IN A CELL IN A SPACE-DIVISION MULTIPLEXING MANNER

S105

CONFIGURE AT LEAST ONE SECOND BEAMFORMING CODEBOOK, THE SECOND BEAMFORMING CODEBOOK BEING DIFFERENT FROM THE FIRST BEAMFORMING CODEBOOK; PRECODING THE PLURALITY OF THE SAME COMMON CONTROL SIGNALS RESPECTIVELY BY USING BEAMFORMING CODEWORDS IN THE AT LEAST ONE SECOND BEAMFORMING CODEBOOK; AND SENDING, BY USING A PLURALITY OF BEAMS, THE PLURALITY OF COMMON CONTROL SIGNALS THAT ARE PRECODED WITH THE AT LEAST ONE SECOND BEAMFORMING CODEBOOK RESPECTIVELY TO THE RESPECTIVE BEAM COVERAGE REGIONS IN THE CELL IN THE SPACE-DIVISION MULTIPLEXING MANNER, WHEREIN THE BEAM COVERAGE REGIONS, TO WHICH THE COMMON CONTROL SIGNALS PRECODED WITH THE AT LEAST ONE SECOND BEAMFORMING CODEBOOK ARE SENT, HAVE A BEAM SHIFT RELATIVE TO THE BEAM COVERAGE REGIONS TO WHICH THE COMMON CONTROL SIGNALS PRECODED WITH THE FIRST BEAMFORMING CODEBOOK ARE SENT

S106

100

Fig. 1

A DL TIME SLOT

$T_{symb}$ OFDM SYMBOL

SAME COMMON CONTROL SIGNALING PRECODED WITH WEIGHT OF BEAM 1

SAME COMMON CONTROL SIGNALING PRECODED WITH WEIGHT OF BEAM 2 (θ Shift Of Matrix 1）

COMMON PDCCH

PBCH (MIB)

$N_{RB}^{DL} \times M_{sc}^{RB}$ SUB-CARRIER

CENTER RESOURCE BLOCKS /FIXED RESOURCE BLOCKS

SYNCHRONIZATION SIGNALING

BEAMFORMED REFERENCE SIGNAL WITH SPATIAL MULTIPLEXING BEAMFORMING MATRIX 1

BEAMFORMED REFERENCE SIGNAL WITH SPATIAL MULTIPLEXING BEAMFORMING MATRIX 2

$l = 0$

$l = N_{symb}^{DL} - 1$

DL TIME SLOT t

DL TIME SLOT t+1

EFFECTIVE UPDATE TIME

Fig. 2

PRECODE A REFERENCE SIGNAL SEQUENCE OF THE COMMON CONTROL SIGNALS RESPECTIVELY BY USING RESPECTIVE BEAMFORMING CODEWORDS IN THE BEAMFORMING CODEBOOK, SO AS TO GENERATE A PLURALITY OF DIFFERENT PRECODED REFERENCE SIGNAL SEQUENCES; AND SCAN EACH REGION OF A CELL WITH A SINGLE BEAM SIMULTANEOUSLY WITHIN THE EACH REGION IN A SPACE-DIVISION MULTIPLEXING MANNER, AN ENTIRETY OF THE EACH REGION BEING SCANNED WITH A DIFFERENT SINGLE BEAMS RESPECTIVELY, SO AS TO TRANSMIT THE PLURALITY OF DIFFERENT PRECODED REFERENCE SIGNAL SEQUENCES, WHEREIN THE SINGLE BEAM CARRIES ONE PRECODED REFERENCE SIGNAL SEQUENCE

S201

CONFIGURE A BEAMFORMING CODEBOOK

S202

PRECODING THE COMMON CONTROL SIGNALS RESPECTIVELY BY USING RESPECTIVE BEAMFORMING CODEWORDS IN THE BEAMFORMING CODEBOOK

S203

FOR EACH PRECODED COMMON CONTROL SIGNAL, SCANNING AN ENTIRETY OF A CELL WITH A SINGLE BEAM SEQUENTIALLY SO AS TO TRANSMIT THE PRECODED COMMON CONTROL SIGNAL, WHEREIN THE SINGLE BEAM CARRIES ONE PRECODED COMMON CONTROL SIGNAL

S204

200

Fig. 3

Fig. 4

PRECODE A REFERENCE SIGNAL SEQUENCE OF THE COMMON CONTROL SIGNALS RESPECTIVELY BY USING RESPECTIVE BEAMFORMING CODEWORDS IN THE BEAMFORMING CODEBOOK, SO AS TO GENERATE A PLURALITY OF DIFFERENT PRECODED REFERENCE SIGNAL SEQUENCES; AND SCAN EACH REGION OF A CELL WITH A SINGLE BEAM SIMULTANEOUSLY WITHIN THE EACH REGION IN A SPACE-DIVISION MULTIPLEXING MANNER, AN ENTIRETY OF THE EACH REGION BEING SCANNED WITH A DIFFERENT SINGLE BEAMS RESPECTIVELY, SO AS TO TRANSMIT THE PLURALITY OF DIFFERENT PRECODED REFERENCE SIGNAL SEQUENCES, WHEREIN THE SINGLE BEAM CARRIES ONE PRECODED REFERENCE SIGNAL SEQUENCE

S301

CONFIGURE A BEAMFORMING CODEBOOK

S302

PRECODE A PLURALITY OF COMMON CONTROL SIGNALS RESPECTIVELY BY USING RESPECTIVE BEAMFORMING CODEWORDS IN THE BEAMFORMING CODEBOOK, THE PLURALITY OF COMMON CONTROL SIGNALS BEING THE SAME

S303

SCAN EACH REGION OF A CELL WITH A SINGLE BEAM SIMULTANEOUSLY WITHIN THE EACH REGION IN A SPACE-DIVISION MULTIPLEXING MANNER, AN ENTIRETY OF THE EACH REGION BEING SCANNED WITH A DIFFERENT SINGLE BEAMS RESPECTIVELY SO AS TO TRANSMIT A PLURALITY OF PRECODED COMMON CONTROL SIGNALS, WHEREIN THE SINGLE BEAM CARRIES ONE PRECODED COMMON CONTROL SIGNAL

S304

300

Fig. 5

Fig. 6

DEVICE 10

CONFIGURING MODULE
101

PRECODING MODULE
102

SENDING MODULE
103

Fig. 7

DEVICE 20

CONFIGURING MODULE
201

PRECODING MODULE
202

SCANNING MODULE 203

Fig. 8

DEVICE 30

CONFIGURING MODULE
301

PRECODING MODULE
302

SCANNING MODULE 303

Fig. 9

<div align="center">

# INTERNATIONAL SEARCH REPORT

</div>

| International application No. |
| --- |
| **PCT/CN2016/079081** |

**A. CLASSIFICATION OF SUBJECT MATTER**

<div align="center">

H04B 7/04 (2006.01) i; H04J 11/00 (2006.01) i

</div>

According to International Patent Classification (IPC) or to both national classification and IPC

**B. FIELDS SEARCHED**

Minimum documentation searched (classification system followed by classification symbols)

<div align="center">

H04B; H04J; H04W

</div>

Documentation searched other than minimum documentation to the extent that such documents are included in the fields searched

Electronic data base consulted during the international search (name of data base and, where practicable, search terms used)

CNABS, CNTXT, CNKI, VEN, USTXT, 3GPP: millimetre wave, 5G, millimeter, high 1w frequency, beam, form???, codebook, codeword, control???, precod???, space w division w multiplexing, SDM, scan+

**C. DOCUMENTS CONSIDERED TO BE RELEVANT**

| Category* | Citation of document, with indication, where appropriate, of the relevant passages | Relevant to claim No. |
| --- | --- | --- |
| A | CN 101682909 A (HUAWEI TECHNOLOGIES CO., LTD.), 24 March 2010 (24.03.2010), the whole document | 1-19 |
| A | CN 104618964 A (QINGDAO UNIVERSITY OF SCIENCE & TECHNOLOGY), 13 May 2015 (13.05.2015), the whole document | 1-19 |
| A | US 2013121185 A1 (SAMSUNG ELECTRONICS CO., LTD.), 16 May 2013 (16.05.2013), the whole document | 1-19 |
| A | US 2015372737 A1 (LG ELECTRONICS INC.), 24 December 2015 (24.12.2015), the whole document | 1-19 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 December 2016 (22.12.2016) | **05 January 2017 (05.01.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZOU, Feifei** Telephone No.: (86-10) **62411263** |
| --- | --- |

Form PCT/ISA/210 (second sheet) (July 2009)

## INTERNATIONAL SEARCH REPORT
Information on patent family members

| International application No. |
| --- |
| **PCT/CN2016/079081** |

| Patent Documents referred in the Report | Publication Date | Patent Family | Publication Date |
| --- | --- | --- | --- |
| CN 101682909 A | 24 March 2010 | CN 101682909 B | 27 July 2011 |
| | | WO 2008113210 A1 | 25 September 2008 |
| CN 104618964 A | 13 May 2015 | None | |
| US 2013121185 A1 | 16 May 2013 | WO 2013069960 A1 | 16 May 2013 |
| | | US 9094977 B2 | 28 July 2015 |
| | | KR 20130052670 A | 22 May 2013 |
| | | EP 2777175 A1 | 17 September 2014 |
| US 2015372737 A1 | 24 December 2015 | None | |

Form PCT/ISA/210 (patent family annex) (July 2009)